# FASCICULE DE BREVET EUROPEEN

(11) **EP 4 405 185 B1**
(45) Date de publication et mention de la délivrance du brevet: **29.10.2025**
(21) Numéro de dépôt: 22789645.3
(22) Date de dépôt: 19.09.2022
(51) Int. Cl.: B60C 1/00

(54) **PRODUIT RENFORCÉ COMPRENANT UNE COMPOSITION DE CAOUTCHOUC À BASE D'UN COMPOSÉ POLYPHÉNOLIQUE, UNE GUANIDINE ET AU MOINS UN COMPOSÉ PÉROXYDE**
VERSTÄRKTES PRODUKT ENTHALTEND EINE KAUTSCHUKZUSAMMENSETZUNG BASIEREND AUF EINER PHENOLVERBINDUNG, EINES GUANIDINES UND MINDESTENS EINER PEROXIDVERBINDUNG
REINFORCED PRODUCT COMPRISING A RUBBER COMPOSITION BASED ON A PHENOLIC COMPOUND, A GUANIDINE AND AT LEAST A PEROXIDE COMPOUND

(30) Priorité: 23.09.2021 FR 2110047
(43) Date de publication de la demande: 31.07.2024
(73) Titulaire: COMPAGNIE GENERALE DES ETABLISSEMENTS MICHELIN, 63000 Clermont-Ferrand (FR)
(72) Inventeur: THUILLIEZ, Anne-Lise, 63040 CLERMONT-FERRAND Cedex 9 (FR); GAVARD-LONCHAY, Odile, 63040 CLERMONT-FERRAND Cedex 9 (FR)
(74) Mandataire: M.F.P. Michelin
(86) Numéro de dépôt international: PCT/FR2022/051756
(87) Numéro de publication internationale: WO 2023/047046

(56) Documents cités:
- WO-A1-2014/095585
- WO-A1-2017/081387
- WO-A1-2020/058613
- CN-A- 107 652 558
- FR-A1- 3 089 989
- FR-A1- 3 122 657

## Description

### Domaine technique de l'invention

La présente invention est relative aux produits renforcés à base d'une composition élastomérique, ainsi qu'aux articles comprenant de tels produits renforcés.

### Art antérieur

De nombreux articles à base de caoutchouc, tels que des bandages pneumatiques, des bandages non pneumatiques - c'est-à-dire des bandages maintenus en forme par un moyen autre qu'un gaz sous pression tel que des haubans - ou bandes transporteuses mettent en œuvre des produits renforcés, c'est-à-dire l'association d'une composition de caoutchouc et de câbles de renforcement, souvent métalliques et recouverts en surface de laiton. Les éléments de renforcement étant généralement disposés parallèlement entre eux et enrobés de la composition de caoutchouc, ces produits renforcés sont souvent désignés sous le terme de nappe. Ces nappes étant soumises à des contraintes importantes lors du roulage des bandages ou du défilement des bandes transporteuses, elles doivent satisfaire à de nombreux critères, parfois contradictoires, tels qu'une forte adhésion entre renforts et composition, une bonne résistance à la fissuration, une faible résistance au roulement ou à la mise en mouvement de l'article de caoutchouc et une bonne résistance aux agressions extérieures, notamment à la corrosion.

La fonction d'adhésion impose généralement des formulations spécifiques à la composition de caoutchouc, notamment la nécessité d'un taux de soufre et d'oxyde de zinc élevés, une faible quantité d'acide stéarique, la présence de sel de cobalt, l'emploi d'accélérateur à phase retard longue. Or ces systèmes de vulcanisation à fort taux de soufre constituent une forte contrainte lors de la fabrication de semi-finis, en particulier pour éviter des réticulations prématurées.

Les manufacturiers d'articles de caoutchouc renforcés cherchent donc des formulations de compositions de caoutchouc permettant d'abaisser les teneurs en soufre, voire de s'affranchir du soufre dans les produits renforcés tout en permettant une bonne adhésion sur les câbles de renforcement, que ceux-ci soient recouverts ou non d'un métal ou d'un alliage spécifique.

Les documents WO 2017/081387 et WO 2017/081388 présentent une composition de caoutchouc et un composite à base d'une matrice polymère comportant un polymère diénique fonctionnel, dit « greffé » dont le mode de préparation est enseigné dans ces demandes. Ce polymère diénique fonctionnel porte au moins un groupe aromatique substitué par au moins deux fonctions hydroxyles vicinales. La réticulation de la composition de caoutchouc est réalisée par un système de vulcanisation ou à base d'un ou plusieurs composés peroxydes. De bonnes propriétés d'adhésion de la composition de caoutchouc au métal sont obtenues, mais nécessitent l'utilisation d'un polymère greffé.

La demande JP 2011252107 décrit une composition de caoutchouc ayant une bonne adhésion au métal, cette composition comprenant un élastomère diénique et du sel de cobalt. De l'acide gallique ou un hydrate d'acide gallique facilite la dissociation du sel de cobalt. La composition est réticulée avec un système à base de soufre. Bien que présentant de bonnes caractéristiques d'adhésion, cette composition met en œuvre à la fois du soufre et un sel de cobalt.

Les demandes JP2009007408 et JP2008291173 divulguent des compositions de calandrage comprenant de la silice comme charge renforçante, avec un système de réticulation conventionnel au soufre, et une teneur importante en oxyde de zinc. La demande JP2012229282 décrit une composition de calandrage comprenant une faible teneur en soufre et en oxyde de zinc. Toutefois, cette composition met en œuvre des élastomères spécifiques, fonctionnalisés époxyde.

Poursuivant ses recherches, la demanderesse a découvert un produit renforcé comprenant un élastomère diénique, une charge renforçante comprenant majoritairement de la silice, un composé polyphénolique spécifique et un système de réticulation à base de péroxyde et au moins un composé de la famille des guanidines, qui présente de très bonnes caractéristiques d'adhésion ainsi que des propriétés pérennes.

### Description détaillée de l'invention

L'invention concerne un produit renforcé à base d'au moins un élément de renfort métallique noyé dans une composition de caoutchouc, un article de caoutchouc comprenant un tel produit renforcé et un bandage pneumatique comprenant un tel produit renforcé.

### Définitions

Par l'expression "composition à base de", il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression "partie en poids pour cent parties en poids d'élastomère" (ou pce), il faut entendre au sens de la présente invention, la partie, en masse pour cent parties en masse d'élastomère.

Dans la présente invention, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Ainsi, l'invention concerne au moins l'une des réalisations suivantes :
Un produit renforcé à base d'au moins un élément de renfort métallique noyé dans une composition de caoutchouc, la composition de caoutchouc étant à base d'au moins un élastomère diénique, une charge renforçante comprenant majoritairement de la silice, un système de réticulation à base d'au moins un composé péroxyde, au moins un composé polyphénolique non élastomérique, le composé polyphénolique non élastomérique comprenant au moins trois cycles benzéniques, chacun étant porteur au moins de deux groupes hydroxyles vicinaux, et au moins un composé de la famille des guanidines.

Un produit renforcé dans lequel la masse molaire dudit composé polyphénolique est préférentiellement supérieure à 600 g/mol.

Un produit renforcé dans lequel le composé polyphénolique est préférentiellement choisi parmi les gallotannins, de préférence parmi les esters d'acide gallique et d'un polyol choisi parmi les pentoses et les hexoses.

Un produit renforcé dans lequel le composé polyphénolique est préférentiellement choisi parmi les esters de glucose et d'acide gallique, de manière préférée choisi parmi les polygalloyl glucoses comprenant de 3 à 10, et de préférence de 5 à 10 unités galloyles.

Un produit renforcé dans lequel le composé polyphénolique est préférentiellement choisi parmi les trigalloyl glucoses, les pentagalloyl glucoses, les décagalloyl glucoses et leurs mélanges, de préférence choisi parmi le 1,2,6-Trigalloyl glucose, le 1,3,6-Trigalloyl glucose, le 1,2,3,4,6-Pentagalloyl-glucose, l'acide tannique et leurs mélanges.

Un produit renforcé dans lequel le taux de composé polyphénolique dans la composition de caoutchouc va préférentiellement de 0,1 à 30 pce, de préférence de 5 à 20 pce et de manière préférée de 5 à 15 pce.

Un produit renforcé dans lequel le composé de la famille des guanidines est préférentiellement la diphénylguanidine.

Un produit renforcé dans lequel la teneur en composé de la famille des guanidines va préférentiellement de 0,5 à 3 pce, préférentiellement de 0,5 à 2,5 pce et de manière préférée de 0,5 à 2 pce.

Un produit renforcé dans lequel la composition de caoutchouc comprend préférentiellement moins de 5 pce d'élastomères fonctionnalisés, de préférence moins de 1 pce, et de manière très préférée ne comprend pas d'élastomères fonctionnalisés.

Un produit renforcé, préférentiellement dans lequel ladite composition de caoutchouc ne comprend pas de sel de cobalt ou en comprend moins de 2 pce, préférentiellement moins de 1 pce, de manière préférée moins de 0,5 pce, très préférentiellement moins de 0,1 pce.

Un produit renforcé préférentiellement dans lequel ladite composition de caoutchouc ne comprend pas de soufre moléculaire ou en comprend moins de 1 pce.

Un produit renforcé préférentiellement dans lequel la composition de caoutchouc ne comprend pas d'acide stéarique ou l'un de ses dérivés, ou en comprend moins de 2 pce, préférentiellement moins de 1 pce, de manière préférée moins de 0,5 pce, très préférentiellement moins de 0,1 pce.

Un produit renforcé préférentiellement dans lequel ladite composition de caoutchouc est dépourvue de zinc ou d'oxyde de zinc, ou bien n'en comporte qu'une très faible quantité, préférentiellement moins de 1 pce, de préférence moins de 0,5 pce, plus préférentiellement moins de 0,2 pce.

Un produit renforcé préférentiellement dans lequel la composition de caoutchouc comprend de 10 à 200 pce de charge renforçante.

Un produit renforcé préférentiellement dans lequel la composition de caoutchouc comprend un agent choisi parmi les agents de couplage et les agents de recouvrement de la silice ainsi que leur mélange, la teneur en agent étant dans un domaine allant de 5 à 20% en poids par rapport à la quantité de silice, préférentiellement de 6 à 18% en poids par rapport à la quantité de silice.

Un produit renforcé préférentiellement dans lequel l'élastomère diénique de la composition de caoutchouc est choisi dans le groupe constitué par les polybutadiènes, le caoutchouc naturel, les polyisoprènes de synthèse, les copolymères de butadiène, les copolymères d'isoprène, et les mélanges de ces élastomères, préférentiellement choisi parmi le caoutchouc naturel et les polyisoprènes de synthèse.

Un produit renforcé préférentiellement dans lequel la composition de caoutchouc comprend de 0,01 à 10 pce de composés péroxydes, préférentiellement de 1 à 5 pce.

Un produit renforcé préférentiellement dans lequel le système de réticulation comprend un composé péroxyde choisi parmi les péroxydes organiques.

Un produit renforcé préférentiellement dans lequel l'élément de renfort métallique comprend une surface métallique dont le métal est choisi dans le groupe constitué par le fer, le cuivre, l'étain, le zinc et les alliages comportant au moins un de ces métaux, de préférence choisi dans le groupe constitué par l'acier et le laiton.

Un article de caoutchouc comprenant un produit renforcé selon l'une quelconque des réalisations précédemment décrites.

Un article de caoutchouc selon la réalisation précédente préférentiellement choisi parmi les bandages pneumatiques et non pneumatiques, les bandes transporteuses et les chenilles.

### Elastomère diénique

Le produit renforcé selon l'invention comprend au moins un élastomère diénique.

Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Les élastomères diéniques compris dans la composition selon l'invention sont préférentiellement essentiellement insaturés.

On entend particulièrement par élastomère diénique susceptible d'être utilisé dans les compositions conformes à l'invention :
(a) tout homopolymère d'un monomère diène conjugué ou non ayant de 4 à 18 atomes de carbone ;
(b) tout copolymère d'un diène, conjugué ou non, ayant de 4 à 18 atomes de carbone et d'au moins un autre monomère.

L'autre monomère peut être l'éthylène, une oléfine ou un diène, conjugué ou non.

À titre de diènes conjugués conviennent les diènes conjugués ayant de 4 à 12 atomes de carbone, en particulier les 1,3-diènes, tels que notamment le 1,3-butadiène et l'isoprène.

À titre d'oléfines conviennent les composés vinylaromatiques ayant de 8 à 20 atomes de carbone et les α-monooléfines aliphatiques ayant de 3 à 12 atomes de carbone.

À titre de composés vinylaromatiques conviennent par exemple le styrène, l'ortho-, méta-, para-méthylstyrène, le mélange commercial "vinyle-toluène", le para-tertiobutylstyrène.

À titre d'α-monooléfines aliphatiques conviennent notamment les α-monooléfines aliphatiques acycliques ayant de 3 à 18 atomes de carbone.

Préférentiellement, l'élastomère diénique est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères. Les copolymères de butadiène sont particulièrement choisis dans le groupe constitué par les copolymères de butadiène-styrène (SBR).

De manière préférée, l'élastomère diénique est un élastomère isoprénique.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence choisi dans le groupe constitué par le caoutchouc naturel, les polyisoprènes cis-1,4 de synthèse et leurs mélanges ; parmi ces polyisoprènes de synthèse, sont utilisés de préférence des polyisoprènes ayant un taux (% molaire) de liaisons cis-1,4 supérieur à 90%, plus préférentiellement encore supérieur à 98%. De manière préférée et selon l'un quelconque des arrangements de la présente invention, l'élastomère diénique est le caoutchouc naturel.

Préférentiellement le taux d'élastomère diénique, de préférence d'élastomère isoprénique, de préférence le caoutchouc naturel, est de 50 à 100 pce, plus préférentiellement de 60 à 100 pce, de manière plus préférentielle de 70 à 100 pce, plus préférentiellement encore de 80 à 100 pce et de manière très préférentielle de 90 à 100 pce. En particulier le taux d'élastomère diénique, de préférence d'élastomère isoprénique, de préférence encore de caoutchouc naturel, est très préférentiellement de 100 pce.

Qu'elle contienne un seul élastomère diénique ou un mélange de plusieurs élastomères diéniques, la composition de caoutchouc selon l'invention peut également contenir de manière minoritaire tout type d'élastomère synthétique autre que diénique, voire des polymères autres que des élastomères, par exemple des polymères thermoplastiques. De préférence, la composition de caoutchouc selon l'invention ne contient pas d'élastomère synthétique autre que diénique ni de polymère autre que des élastomères ou en contient moins de 10 pce, de préférence moins de 5 pce.

De préférence, la composition de caoutchouc comprend moins de 5 pce d'élastomères fonctionnalisés, de préférence moins de 1 pce, et de manière très préférée ne comprend pas d'élastomères fonctionnalisés.

Par « fonctionnalisé », on entend que l'élastomère est porteur d'un groupe fonctionnel tel qu'un groupe comprenant une fonction diène conjuguée, une fonction époxyde, une fonction carbonyle, une fonction anhydride ou une fonction ester d'acide.

Ainsi, et de manière très préférée, la composition de caoutchouc comprend moins de 5 pce d'élastomères fonctionnalisés époxyde, de préférence moins de 1 pce, et de manière très préférée ne comprend pas d'élastomères fonctionnalisés époxyde.

### Système de réticulation

La composition de caoutchouc du produit renforcé selon l'invention est à base d'un système de réticulation à base d'au moins un composé péroxyde.

Le ou lesdits composés péroxydes représentent de 0,01 à 10 pce de la composition de caoutchouc, de préférence de 1 à 5 pce.

Comme peroxyde utilisable selon l'invention, on peut utiliser tout peroxyde connu de l'homme de l'art.

De manière préférée, le peroxyde est choisi parmi les peroxydes organiques.

Par « peroxyde organique », on entend un composé organique, c'est-à-dire contenant du carbone, comportant un groupe -O-O- (deux atomes d'oxygène liés par une liaison covalente simple).

Durant le procédé de réticulation, le peroxyde organique se décompose au niveau de sa liaison instable O-O en radicaux libres. Ces radicaux libres permettent la création des liaisons de réticulation.

Selon un mode de réalisation, le peroxyde organique est choisi dans le groupe constitué par les peroxydes de dialkyle, les monoperoxycarbonates, les peroxydes de diacyle, les peroxycétales, les peroxyesters, et leurs mélanges.

De préférence, les peroxydes de dialkyle sont choisis dans le groupe constitué par le peroxyde de dicumyle, le peroxyde de di-t-butyle, peroxyde de t-butylcumyle, le 2,5-diméthyl-2,5-di(t-butylperoxy)hexane, le 2,5-diméthyl-2,5-di(t-amylperoxy)-hexane, le 2,5-diméthyl-2,5-di(t-butylperoxy)hexyne-3, le 2,5-diméthyl-2,5-di(t-amylperoxy)hexyne-3, α,α'-di-[(t-butyl-peroxy)isopropyl] benzène, le α,α'-di-[(t-amyl-peroxy)isopropyl] benzène, le peroxyde de di-t-amyle, le 1,3,5-tri-[(t-butylperoxy)isopropyl]benzène, le 1,3-diméthyl-3-(t-butylperoxy)butanol, le 1,3-diméthyl-3-(t -amylperoxy) butanol, et leurs mélanges.

Certains monoperoxycarbonates tels que le OO-tert-butyl-O-(2-éthylhexyl) monoperoxycarbonate, le OO-tert-butyl-O-isopropyl monoperoxycarbonate, le OO-tert-amyl-O-2-éthyl hexyl monoperoxycarbonate, et leurs mélanges, peuvent également être utilisés.

Parmi les peroxydes de diacyles, le peroxyde préféré est le peroxyde de benzoyle.

Parmi les peroxycétales, les peroxydes préférés sont choisis dans le groupe constitué par le 1,1-di-(t-butylperoxy)-3,3,5-triméthylcyclohexane, le 4,4-di-(t-butylperoxy)valérate de n-butyle, le 3,3-di-(t-butylperoxy)butyrate d'éthyle, le 2,2-di-(t-amylperoxy)-propane, le 3,6,9-triethyl-3,6,9-trimethyl-1,4,7-triperoxynonane (ou peroxyde de méthyl éthyl cétone trimère cyclique), le 3,3,5,7,7-pentamethyl-1,2,4-trioxepane, le 4,4-bis(t-amylperoxy)valérate de n-butyle, le 3,3-di(t-amylperoxy)butyrate d'éthyle, le 1,1-di(t-butylperoxy)cyclohexane, le 1,1-di(t-amylperoxy)cyclohexane, et leurs mélanges.

De préférence, les peroxyesters sont choisis dans le groupe constitué par le tert-butylperoxybenzoate, le tert-butyleperoxy-2-ethylhexanoate, le tert-butyleperoxy-3,5,5-triméthylehexanoate et leurs mélanges.

De manière particulièrement préférée, le peroxyde organique est choisi dans le groupe constitué par le peroxyde de dicumyle, les peroxydes d'aryle ou de diaryle, le peroxyde de diacétyle, le peroxyde de benzoyle, le peroxyde de dibenzoyle, le peroxyde de ditertbutyle, le peroxyde de tertbutylcumyle, le 2,5-bis (tertbutylperoxy)-2,5-diméthylhexane, le n-butyl-4,4'-di(tert-butylperoxy) valérate, le OO-(t-butyl)-O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene, le 1,1-di-(t-butylperoxy)-3,3,5-triméthylcyclohexane et les mélanges de ces derniers, encore préférentiellement dans le groupe consistant en le peroxyde de dicumyle, le n-butyl-4,4'-di(tert-butylperoxy)-valérate, le OO-(t-butyl) O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene, le 1,1-di-(t-butylperoxy)-3,3,5-triméthylcyclohexane et les mélanges de ces derniers.

### Charge renforçante

La composition de caoutchouc du produit renforcé de l'invention comprend une charge renforçante comprenant majoritairement de la silice.

Par majoritairement, on entend que la silice représente au moins 50% en poids des charges renforçantes de la composition de caoutchouc, de manière préférée au moins 70% en poids et préférentiellement au moins 90% en poids des charges renforçantes de la composition de caoutchouc.

On peut utiliser, en complément de la silice majoritaire, tout type de charge dite renforçante, connue pour ses capacités à renforcer une composition de caoutchouc utilisable notamment pour la fabrication de pneumatiques, par exemple une charge organique renforçante telle que du noir de carbone, une charge inorganique renforçante ou encore un mélange de ces deux types de charges.

Préférentiellement, la composition de caoutchouc comprend au plus 10 pce de noir de carbone, de manière préférée au plus 5 pce et de manière très préférée au plus 1 pce de noir de carbone. De manière très préférentielle, indépendamment des autres caractéristiques de la composition de caoutchouc, celle-ci ne comprend pas de noir de carbone, à l'exception des impuretés inévitables.

La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence comprises dans un domaine allant de 30 à 400 m²/g, notamment de 60 à 300 m²/g. On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

Pour les charges inorganiques telles que la silice par exemple, les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO97/36724-A2 ou WO99/16600-A1).

Pour les noirs de carbone, la surface spécifique STSA est déterminée selon la norme ASTM D6556-2016.

L'état physique sous lequel se présente la charge inorganique renforçante est indifférent, que ce soit sous forme de poudre, de microperles, de granulés, ou encore de billes ou toute autre forme densifiée appropriée. Bien entendu on entend également par charge inorganique renforçante des mélanges de différentes charges inorganiques renforçantes, en particulier de silices telles que décrites ci-dessus.

L'homme du métier saura adapter le taux de charge renforçante total selon l'utilisation concernée, notamment selon le type de pneumatiques concerné, par exemple pneumatique pour moto, pour véhicule de tourisme ou encore pour véhicule utilitaire tel que camionnette ou poids lourd. De manière préférentielle, le taux de charge renforçante totale (charge inorganique renforçante telle que silice et/ou noir de carbone) est compris entre 10 et 200 pce, plus préférentiellement entre 25 et 180 pce, l'optimum étant de manière connue différent selon les applications particulières visées.

Pour coupler la charge inorganique renforçante à l'élastomère diénique, en particulier la silice, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle) commercialisé par la société Momentive sous la dénomination « NXT Silane ». Plus préférentiellement, l'organosilane est un organosilane polysulfuré.

La teneur en agent de couplage dans la composition de l'invention est préférentiellement inférieure ou égale à 35 pce, étant entendu qu'il est en général souhaitable d'en utiliser le moins possible. Typiquement le taux d'agent de couplage représente de 0,5% à 15% en poids par rapport à la quantité de charge inorganique renforçante. Son taux est préférentiellement compris dans un domaine allant de 0,5 à 20 pce, plus préférentiellement compris dans un domaine allant de 3 à 10 pce. Ce taux est aisément ajusté par l'homme du métier selon le taux de charge inorganique renforçante utilisé dans la composition de l'invention.

L'homme du métier comprendra qu'en remplacement de la charge inorganique renforçante décrite ci-dessus, pourrait être utilisée une charge renforçante d'une autre nature, dès lors que cette charge renforçante d'une autre nature serait recouverte d'une couche inorganique telle que de la silice, ou bien comporterait à sa surface des sites fonctionnels, notamment hydroxyles, nécessitant l'utilisation d'un agent de couplage pour établir la liaison entre cette charge renforçante et l'élastomère diénique. À titre d'exemple, on peut citer des noirs de carbone partiellement ou intégralement recouverts de silice, ou des noirs de carbone modifiés par de la silice, tels que, à titre non limitatif, les charges de type « Ecoblack^{®} » de la série CRX2000 » ou de la série « CRX4000 » de la société Cabot Corporation.

### Composé polyphénolique

La composition selon l'invention comprend au moins un composé polyphénolique non élastomérique comprenant au moins trois cycles benzéniques, chacun étant porteur au moins de deux groupes hydroxyles vicinaux.

Par vicinaux, on entend que les deux groupes hydroxyles portés par le cycle aromatique sont en position ortho l'un par rapport à l'autre.

Par cycle benzénique, on entend un cycle aromatique substitué comprenant 6 atomes de carbone.

La masse molaire du composé polyphénolique est préférentiellement supérieure à 600 g/mol, préférentiellement supérieure à 800 g/mol, de manière préférée supérieure à 1000 g/mol et de manière très préférée supérieure à 1200 g/mol.

De manière préférée, le composé polyphénolique est choisi parmi les gallotannins, c'est-à-dire des esters d'acide gallique et de polyol, le polyol étant de préférence choisi parmi les pentoses et les hexoses. De préférence, le composé polyphénolique est choisi parmi les esters de glucose et d'acide gallique, de manière préférée choisi parmi les polygalloyl glucoses comprenant de 3 à 10 unités galloyles, de préférence comprenant de 5 à 10 unités galloyles. De manière préférée, le composé polyphénolique est choisi parmi les trigalloyl glucoses, les pentagalloyl glucoses et les décagalloyl glucoses et leurs mélanges, et de préférence parmi le 1,2,6-Trigalloyl glucose, le 1,3,6-Trigalloyl glucose, le 1,2,3,4,6-Pentagalloyl-glucose l'acide tannique (ou beta-D-Glucose pentakis(3,4-dihydroxy-5-((3,4,5-trihydroxybenzoyl)oxy)benzoate)) et leurs mélanges. De manière très préférée le composé polyphénolique est l'acide tannique. De tels composés, de par la complexité de leur structure, sont incorporés en tant que tel dans la composition de caoutchouc et ne peuvent être le produit de réactions chimiques, notamment d'estérification, entre les différents constituants de la composition de caoutchouc.

La composition de caoutchouc selon l'invention présente des caractéristiques d'adhésion à un élément de renfort métallique particulièrement intéressantes, notamment grâce à la présence du composé polyphénolique en association avec une charge renforçante silice majoritaire et au moins un composé de la famille des guanidines, pour la constitution de produits renforcés, et tout particulièrement de produits renforcés à destination de pneumatiques et ce, que l'élément de renfort soit recouvert d'un métal ou d'un alliage spécifique ou non.

La composition de caoutchouc selon l'invention comprend préférentiellement de 0,1 à 30 pce de composé polyphénolique, préférentiellement de 5 à 20 pce et très préférentiellement de 5 à 15 pce. En deçà de 0,1 pce, le composé polyphénolique n'a pas d'effet notable sur les propriétés d'adhésion de la composition de caoutchouc selon l'invention. Au-delà de 30 pce, on n'observe plus de gain significatif.

De manière surprenante, une très bonne adhésion de la composition de caoutchouc sur des câbles de renforcement métallique est obtenue sans qu'il soit besoin d'utiliser de sels de cobalt, d'acide stéarique, ou d'oxyde de zinc. Ainsi, la composition selon l'invention est préférentiellement dépourvue de sels de cobalt, tels qu'ils sont connus de l'homme du métier, et dont l'effet connu est une amélioration de l'adhésion et sa pérennité, ou en contient moins de 1 pce, de préférence moins de 0,5 pce, plus préférentiellement moins de 0,2 pce et très préférentiellement moins de 0,1 pce.

### Composé de la famille des guanidines

La composition de caoutchouc du produit renforcé selon l'invention comprend au moins un composé de la famille des guanidines. Ces composés sont souvent utilisés en association avec un système de réticulation à base de soufre, dit de vulcanisation, en tant qu'accélérateurs de vulcanisation. Or il a été observé qu'en association avec une charge renforçante comprenant majoritairement de la silice, un composé polyphénolique et un système de réticulation à base d'au moins un composé péroxyde, la présence d'au moins un composé de la famille des guanidines permettait d'améliorer significativement les propriétés du produit renforcé selon l'invention.

De manière préférée, la teneur en composé de la famille des guanidines dans la composition de caoutchouc va de 0,5 à 3 pce, préférentiellement de 0,5 à 2,5 pce et de manière préférée de 0,5 à 2 pce.

Préférentiellement, le composé de la famille des guanidines est la diphénylguanidine.

### Additifs divers

Les compositions de caoutchouc conformes à l'invention peuvent comporter également tout ou partie des additifs usuels, connus de l'homme de l'art et habituellement utilisés dans les compositions de caoutchouc pour pneumatiques, en particulier de couches internes telles que définies ultérieurement dans la présente demande, comme par exemple des plastifiants (huiles plastifiantes et/ou résines plastifiantes), des charges renforçantes ou non renforçantes autres que celles précitées, des pigments, des agents de protection tels que cires anti-ozone, anti-ozonants chimiques, anti-oxydants, des agents anti-fatigue, des résines renforçantes (telles que décrites par exemple dans la demande WO 02/10269).

De manière préférée, indépendamment des autres caractéristiques de l'invention, la composition de caoutchouc du produit renforcé selon l'invention est dépourvue de résine renforçante ou en comprend moins de 5 pce, de préférence moins de 1 pce.

Ces compositions peuvent également contenir, en complément des éventuels agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes (par exemple l'octyltriéthoxysilane, ou silane octéo), des polyols, des polyéthers, des polyorganosiloxanes hydroxylés ou hydrolysables.

### Préparation des compositions de caoutchouc

La composition de caoutchouc conforme à l'invention est fabriquée dans des mélangeurs appropriés, en utilisant des phases de préparation bien connues de l'homme du métier :
- une phase de travail ou malaxage thermomécanique, qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, le composé polyphénolique, les charges, les éventuels autres additifs divers. L'incorporation de la charge à l'élastomère peut être réalisée en une ou plusieurs fois en malaxant thermomécaniquement. Dans le cas où la charge, en particulier le noir de carbone, est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers.
   Le malaxage thermomécanique est réalisé à haute température, jusqu'à une température maximale comprise entre 110°C et 200°C, de préférence entre 130°C et 185°C, pendant une durée généralement comprise entre 2 et 10 minutes.
- une seconde phase de travail mécanique peut être ensuite réalisée dans un mélangeur externe tel qu'un mélangeur à cylindres, après refroidissement du mélange obtenu au cours de la première phase jusqu'à une plus basse température, typiquement inférieure à 120°C, par exemple entre 40°C et 100°C.

Le système de réticulation est ajouté, conformément aux connaissances de l'Homme du métier, lors de la première ou de la seconde phase lorsque celle-ci est réalisée. Un système de réticulation à base de péroxydes ou de soufre sera typiquement ajouté lors de la seconde phase.

La composition finale ainsi obtenue est ensuite calandrée, par exemple sous la forme d'une feuille ou d'une plaque, notamment pour une caractérisation au laboratoire, ou encore extrudée sous la forme d'un semi-fini (ou profilé) de caoutchouc.

La composition peut être soit à l'état cru (avant réticulation ou vulcanisation), soit à l'état cuit (après réticulation ou vulcanisation), peut être un produit semi-fini qui peut être utilisé dans un pneumatique.

La cuisson peut être conduite, de manière connue de l'Homme du métier, à une température généralement comprise entre 130°C et 200°C, sous pression, pendant un temps suffisant qui peut varier par exemple entre 5 et 90 min en fonction notamment de la température de cuisson, du système de réticulation adopté, de la cinétique de réticulation de la composition considérée ou encore de la taille du pneumatique.

Par l'expression produit renforcé "à base au moins d'un élément de renfort métallique et d'une composition de caoutchouc", il faut entendre un produit renforcé comprenant l'élément de renfort et ladite composition, la composition ayant pu réagir avec la surface de l'élément de renfort lors des différentes phases de fabrication du produit renforcé, en particulier au cours de la réticulation de la composition ou au cours de la confection du produit renforcé avant réticulation de la composition.

Ledit élément de renfort métallique est un élément filaire. L'élément de renfort est métallique, c'est-à-dire constitué d'un matériau métallique.

La composition de caoutchouc du produit renforcé selon l'invention enrobe au moins une partie de l'élément de renfort, préférentiellement la totalité dudit élément.

Selon une première variante de l'invention, la surface métallique de l'élément de renfort est faite d'un matériau différent du restant de l'élément de renfort. Autrement dit, l'élément de renfort est fait d'un matériau métallique qui est au moins en partie, préférentiellement totalement, recouvert par une couche métallique qui constitue la surface métallique.

Selon une deuxième variante de l'invention, l'élément de renfort métallique est fait d'un même matériau, auquel cas l'élément de renfort est fait d'un métal qui est identique au métal de la surface métallique.

Selon un mode de réalisation de l'invention, la surface métallique comprend un métal choisi dans le groupe constitué par le fer, le cuivre, le zinc, l'étain, l'aluminium, le cobalt, le nickel et les alliages comportant au moins un de ces métaux. Les alliages peuvent être par exemple des alliages binaires ou ternaires, comme l'acier, le bronze et le laiton. De préférence, le métal de la surface métallique est le fer, le cuivre, l'étain, le zinc ou un alliage comportant au moins un de ces métaux. De manière plus préférentielle, le métal de la surface métallique est l'acier, le laiton (alliage Cu-Zn), le zinc ou le bronze (alliage Cu-Sn), de manière encore plus préférée le laiton ou l'acier, et de manière très préférée le laiton.

Lorsque la surface métallique est en acier, l'acier est préférentiellement un acier au carbone ou un acier inoxydable. Lorsque l'acier est un acier au carbone, sa teneur en carbone, en poids, est de préférence comprise entre 0.01% et 1.2% ou entre 0.05% et 1.2%, ou bien encore entre 0.2% et 1.2%, notamment entre 0.4% et 1.1%. Lorsque l'acier est inoxydable, il comporte de préférence au moins 11% de chrome et au moins 50% de fer.

Selon un mode de réalisation préféré, le produit renforcé comprend plusieurs éléments de renforcement tels que définis ci-dessus et une gomme de calandrage dans laquelle sont noyés les éléments de renforcement, la gomme de calandrage consistant en la composition de caoutchouc du produit renforcé selon l'invention. Selon ce mode de réalisation, les éléments de renforcement sont agencés généralement côte à côte selon une direction principale. Pour une application envisagée dans le pneumatique, le produit renforcé peut donc constituer une armature de renforcement pour pneumatique.

Le produit renforcé conforme à l'invention peut être à l'état cru (avant réticulation de la composition de caoutchouc) ou à l'état cuit (après réticulation de la composition de caoutchouc). Le produit renforcé est cuit après mise en contact du ou des éléments de renfort avec la composition de caoutchouc selon l'invention.

Le produit renforcé peut être fabriqué par un procédé qui comprend les étapes suivantes :
- Réaliser deux couches de la composition de caoutchouc,
- Prendre le ou les éléments de renfort en sandwich dans les deux couches en le(s) déposant entre les deux couches,
- Le cas échéant cuire le produit renforcé.

Alternativement, le produit renforcé peut être fabriqué en déposant l'élément de renfort sur une portion d'une couche, la couche est alors repliée sur elle-même pour couvrir l'élément de renfort qui est ainsi pris en sandwich sur toute sa longueur ou une partie de sa longueur.

La réalisation des couches peut se faire par calandrage. Au cours de la cuisson du produit renforcé, la composition de caoutchouc est réticulée.

Lorsque le produit renforcé est destiné à être utilisé en tant qu'armature de renforcement dans un pneumatique, la cuisson du produit renforcé a lieu généralement lors de la cuisson de l'enveloppe du pneumatique.

### Bandage pneumatique

Le bandage pneumatique, autre objet de l'invention, a pour caractéristique essentielle de comprendre le produit renforcé conforme à l'invention. Le pneumatique peut être à l'état cru (avant réticulation de la composition de caoutchouc) ou à l'état cuit (après réticulation de la composition de caoutchouc). Généralement, au cours de la fabrication du pneumatique, le produit renforcé est déposé à l'état cru (c'est-à-dire avant réticulation de la composition de caoutchouc) dans la structure du pneumatique avant l'étape de cuisson du pneumatique.

L'invention concerne particulièrement des bandages pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd », c'est-à-dire métro, bus, engins de transport routier (camions, tracteurs, remorques), véhicules hors-la-route tels qu'engins agricoles ou de génie civil, et autres.

Il est possible de définir au sein du bandage pneumatique trois types de zones :
- La zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche aux gaz de gonflage, parfois appelée couche étanche intérieure ou gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.

Le produit renforcé selon l'invention est particulièrement adapté pour être utilisé comme nappe de renforcement dans un bandage pneumatique ou non pneumatique, ou dans un article de caoutchouc renforcé telle qu'une bande transporteuse ou une chenille. Par « bandage non pneumatique », on entend un bandage destiné à être monté sur un véhicule qui est maintenu en forme par un moyen autre qu'un gaz sous pression.

### Exemples

On procède, pour préparer les différentes compositions de caoutchouc dont les compositions sont présentées ci-dessous, de la manière suivante. Dans une première phase, on introduit dans un mélangeur interne (taux de remplissage final : environ 70% en volume) dont la température initiale de cuve est d'environ 60°C, successivement l'élastomère, puis tous les autres constituants du mélange à l'exception du système de réticulation. On conduit alors un travail thermomécanique en une étape jusqu'à atteindre une température maximale de « tombée » de 150°C. On récupère le mélange ainsi obtenu. Dans une seconde phase, on le refroidit sur un mélangeur externe (homo-finisseur) à 30°C, et on ajoute le système de réticulation à base de péroxyde, ou de soufre.

La qualité de la liaison entre la composition de caoutchouc et un élément de renfort métallique est déterminée par un test dans lequel on mesure la force nécessaire pour extraire des tronçons de renforts métalliques de la composition de caoutchouc réticulée. À cette fin, on prépare des produits renforcés sous la forme d'éprouvettes constituées d'éléments de renfort métalliques et d'une composition de caoutchouc.

### Préparation des éprouvettes

Les compositions de caoutchouc sont utilisées pour confectionner un produit renforcé sous la forme d'une éprouvette selon le protocole suivant :
On confectionne un bloc de caoutchouc constitué de deux plaques, appliquées l'une sur l'autre avant cuisson. Les deux plaques du bloc consistent en la même composition de caoutchouc. C'est lors de la confection du bloc que les éléments de renfort métalliques sont emprisonnés entre les deux plaques à l'état cru, à égale distance et en laissant dépasser de part et d'autre de ces plaques une extrémité de l'élément de renfort de longueur suffisante pour la traction ultérieure. Le bloc comportant les renforts est alors cuit. À titre d'exemple, dans le cas présent, la cuisson du bloc est réalisée à 160°C pendant un temps variant de 5 min à 40 min selon la composition sous pression de 5.5 tonnes.

Les fils unitaires des éléments de renfort métalliques sont des fils en acier clair recouverts de laiton. Les éléments de renforts métalliques sont un assemblage de deux fils unitaires de 0,30 mm de diamètre (câbles « 2.30 ») utilisés très couramment pour la réalisation des nappes de travail des pneumatiques de type Tourisme ; l'épaisseur du revêtement en laiton va de 50 nm à 300 nm.

### Test d'adhésion

À l'issue de la cuisson, l'éprouvette ainsi constituée du bloc réticulé et des éléments de renfort métalliques est mise en place dans les mâchoires d'une machine de traction adaptée pour permettre de tester chaque tronçon isolément, à une vitesse et une température données (par exemple, dans le cas présent, à 100 mm/min et température ambiante).

On caractérise les niveaux d'adhésion en mesurant la force dite d'arrachement pour arracher les tronçons de l'éprouvette.

Les résultats sont exprimés en base 100 par rapport à une éprouvette témoin qui contient des éléments de renfort métalliques de nature identique à l'éprouvette testée. L'éprouvette témoin est faite à partir de la composition « T1 ».

Une valeur supérieure à celle de l'éprouvette témoin, arbitrairement fixée à 100, indique un résultat amélioré, c'est-à-dire une force d'arrachement supérieure à celle de l'éprouvette.

Présentant des valeurs supérieures à 100 dans le test d'adhésion, les produits renforcés conformes à l'invention présentent une résistance à l'arrachement améliorée après cuisson de l'éprouvette, c'est-à-dire à t=0, et dont la pérennité est améliorée après vieillissement de l'éprouvette, c'est-à-dire après 21 jours à 55°C sous humidité relative de 95%.

### Essais de traction

Ces essais de traction permettent de déterminer les contraintes d'élasticité et les propriétés à la rupture des compositions de gomme. Les essais ont été effectués conformément à la norme française NF T 46-002 de septembre 1988. Les allongements à la rupture (en %) sont mesurés à 23°C.

Les mesures d'allongement à rupture sont réalisées à t=0, puis après 21 jours à 55°C sous humidité relative de 95%.

Les résultats sont exprimés en base 100, la valeur 100 étant attribuée à la valeur d'allongement à rupture de l'échantillon T1 considéré à t=0. Un résultat supérieur à 100, indique que la composition considérée présente un plus fort allongement à la rupture que la même composition à t=0.

Les compositions conformes présentent un allongement à rupture plus important que la composition témoin.

### Indicateur de résistance au roulement

La résistance au roulement induite par la composition testée est estimée par la mesure des pertes d'énergie, à une température de 60°C, de l'énergie restituée au sixième rebond d'un échantillon auquel on a imposé une énergie initiale, telle que décrite dans la norme DIN 53-512 d'avril 2000. Cette mesure est notée P60 et calculée comme suit : P60(%)=100x(E0-E1)/E0, où E0 représente l'énergie initiale et E1 l'énergie restituée.

Les mesures de pertes à 60°C sont réalisées à t=0, après 21 jours à 77°C sous air. L'hygrométrie de l'air n'est pas contrôlée et correspond à celle de l'air ambiant, soit entre 30 et 50%.

Les résultats sont exprimés en base 100, la valeur 100 étant attribuée à la valeur de perte à 60°C de l'échantillon T1 à t=0. Un résultat supérieur à 100, indique que la composition considérée présente une plus forte perte à 60°C que la même composition à t=0, et donc induit une plus forte résistance au roulement.

On observe que les compositions conformes présentent une perte à 60°C plus faible que la composition témoin avec une évolutivité dans le temps comparable.

### Test de résistance à la propagation des fissures

La vitesse de fissuration a été mesurée sur les éprouvettes des compositions élastomériques à l'aide d'une machine de fatigue cyclique (« Elastomer Test System ») du type 381, de la société MTS, comme expliqué ci-après.

La résistance à la fissuration est mesurée à l'aide de tractions répétées sur une éprouvette initialement accommodée (après un premier cycle de traction), puis entaillée. L'éprouvette de traction est constituée par une plaque de caoutchouc de forme parallélépipédique, par exemple d'épaisseur comprise entre 0,5 et 1,5 mm, de longueur entre 60 et 100 mm et de largeur entre 4 et 8 mm, les deux bords latéraux étant chacun recouverts dans le sens de la longueur d'un bourrelet de caoutchouc cylindrique (diamètre 5 mm) permettant l'ancrage dans les mors de la machine de traction. Les éprouvettes ainsi préparées sont testées après cuisson et après un vieillissement accéléré dans une étuve à 77 °C pendant 21 jours dans une enceinte ventilée. Le test a été conduit à l'air, à une température de 60°C. Après accommodation, 4 entailles très fines de longueur comprise entre 5 et 7 mm sont réalisées à l'aide d'une lame de rasoir, à mi-largeur et alignées dans le sens de la longueur de l'éprouvette, une à chaque extrémité et deux situées de part et d'autre du centre de l'éprouvette, avant le démarrage du test. A chaque cycle de traction, le taux de déformation de l'éprouvette est ajusté automatiquement de manière à maintenir constant le taux de restitution d'énergie (quantité d'énergie libérée lors de la progression de la fissure), à une valeur égale à environ 1500 J/m2. La vitesse de propagation de fissure est mesurée en nanomètre par cycle.

Les résultats sont exprimés en base 100 par rapport à l'éprouvette témoin non vieillie de composition T1. Une valeur supérieure à celle de l'éprouvette non vieillie, arbitrairement fixée à 100, indique un résultat dégradé, c'est-à-dire une vitesse de propagation de fissure supérieure à celle de l'éprouvette témoin non vieillie. Lorsque l'éprouvette casse, la mention « nm » pour « non mesurable » est indiquée. Cette mention témoigne d'une éprouvette présentant une faible résistance à la propagation de fissures.

La mesure n'a pas été réalisée pour l'éprouvette de composition C2.

On observe que les compositions conformes présentent de plus faibles vitesses de propagation de fissure, y compris sur des éprouvettes vieillies.

La composition T0 est une composition usuellement utilisée en calandrage de l'art antérieur telle que présentée, par exemple, dans les documents WO2016/058943 et FR2981298, réticulée par un système à base de soufre.

La composition T1 correspond à la composition C-2 du document WO2020/058613. La composition T2 est similaire, avec une teneur en acide tannique plus faible, qui montre des performances en termes d'adhésion métal et allongement à rupture en retrait par rapport à T1. La composition T3 est une composition présentant des performances en adhésion similaires à la composition T2, comprenant de la silice en tant que charge renforçante. On voit que dans ce système, et contrairement à l'effet connu de la silice pour l'homme du métier, les pertes hystérétiques sont supérieures avec la composition T3 par rapport à la composition T2. Les compositions C1 à C4 sont des compositions conformes à l'invention.

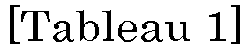

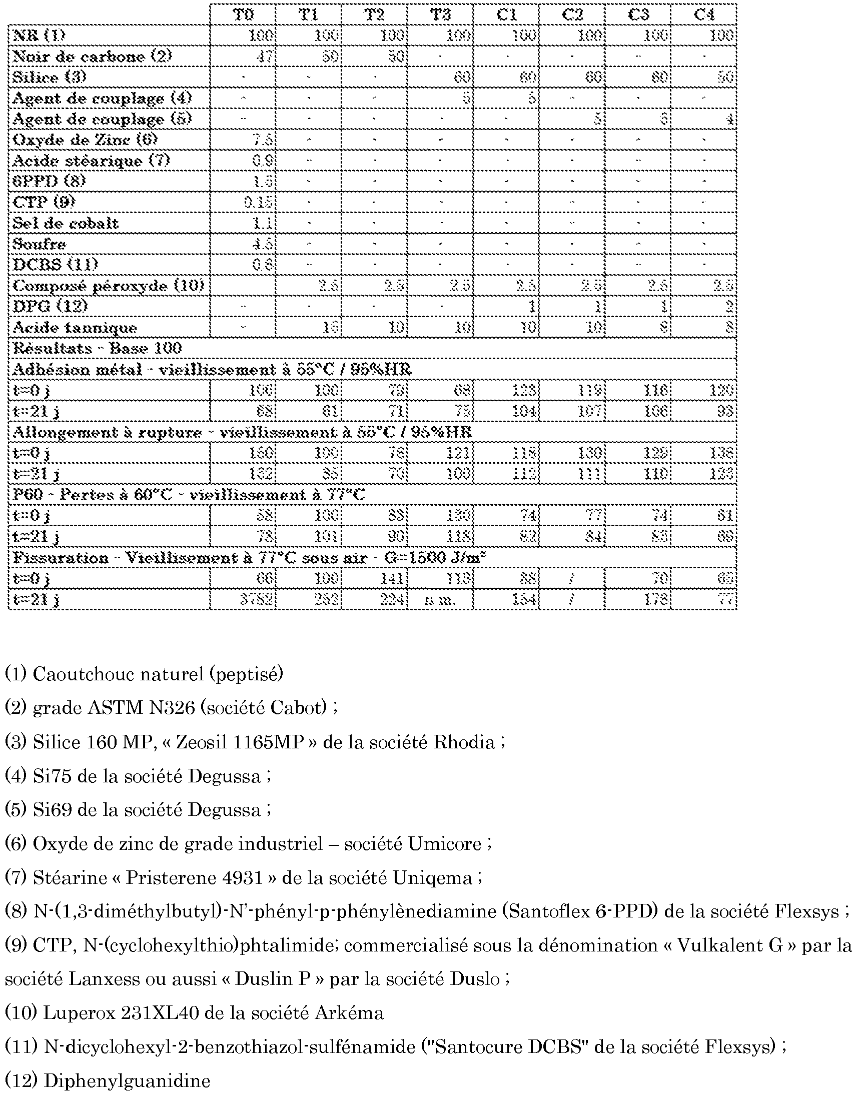

## Revendications

1. Produit renforcé à base d'au moins un élément de renfort métallique noyé dans une composition de caoutchouc, la composition de caoutchouc étant à base d'au moins un élastomère diénique, une charge renforçante comprenant majoritairement de la silice, un système de réticulation à base d'au moins un composé péroxyde, au moins un composé polyphénolique non élastomérique, le composé polyphénolique non élastomérique comprenant au moins trois cycles benzéniques, chacun étant porteur au moins de deux groupes hydroxyles vicinaux, et au moins un composé de la famille des guanidines.

2. Produit renforcé selon la revendication précédente dans lequel la masse molaire dudit composé polyphénolique est supérieure à 600 g/mol.

3. Produit renforcé selon l'une quelconque des revendications précédentes dans lequel le composé polyphénolique est choisi parmi les gallotannins, de préférence parmi les esters d'acide gallique et d'un polyol choisi parmi les pentoses et les hexoses.

4. Produit renforcé selon l'une quelconque des revendications précédentes dans lequel le composé polyphénolique est choisi parmi les esters de glucose et d'acide gallique, de manière préférée choisi parmi les polygalloyl glucoses comprenant de 3 à 10, et de préférence de 5 à 10 unités galloyles.

5. Produit renforcé selon l'une quelconque des revendications précédentes dans lequel le taux de composé polyphénolique dans la composition de caoutchouc va de 0,1 à 30 pce, de préférence de 5 à 20 pce et de manière préférée de 5 à 15 pce.

6. Produit renforcé selon l'une quelconque des revendications précédentes dans lequel le composé de la famille des guanidines est la diphénylguanidine.

7. Produit renforcé selon l'une quelconque des revendications précédentes dans lequel la teneur en composé de la famille des guanidines va de 0,5 à 3 pce, préférentiellement de 0,5 à 2,5 pce et de manière préférée de 0,5 à 2 pce.

8. Produit renforcé selon l'une quelconque des revendications précédentes dans lequel la composition de caoutchouc comprend moins de 5 pce d'élastomères fonctionnalisés, de préférence moins de 1 pce, et de manière très préférée ne comprend pas d'élastomères fonctionnalisés.

9. Produit renforcé selon l'une quelconque des revendications précédentes dans lequel ladite composition de caoutchouc ne comprend pas de soufre moléculaire ou en comprend moins de 1 pce.

10. Produit renforcé selon l'une quelconque des revendications précédentes dans lequel ladite composition de caoutchouc est dépourvue de zinc ou d'oxyde de zinc, ou bien n'en comporte qu'une très faible quantité, préférentiellement moins de 1 pce, de préférence moins de 0,5 pce, plus préférentiellement moins de 0,2 pce.

11. Produit renforcé selon l'une quelconque des revendications précédentes dans lequel la composition de caoutchouc comprend un agent choisi parmi les agents de couplage et les agents de recouvrement de la silice ainsi que leur mélange, la teneur en agent étant dans un domaine allant de 5 à 20% en poids par rapport à la quantité de silice, préférentiellement de 6 à 18% en poids par rapport à la quantité de silice.

12. Produit renforcé selon l'une quelconque des revendications précédentes dans lequel la composition de caoutchouc comprend de 0,01 à 10 pce de composés péroxydes, préférentiellement de 1 à 5 pce.

13. Produit renforcé selon l'une quelconque des revendications précédentes dans lequel le système de réticulation comprend un composé péroxyde choisi parmi les péroxydes organiques.

14. Article de caoutchouc comprenant un produit renforcé selon l'une des revendications 1 à 13.

15. Article selon la revendication précédente choisi parmi les bandages pneumatiques et non pneumatiques, les bandes transporteuses et les chenilles.

## Patentansprüche

1. Verstärktes Produkt auf Basis von mindestens einem metallischen Verstärkungselement, das in eine Kautschukzusammensetzung eingebettet ist, wobei die Kautschukzusammensetzung auf mindestens einem Dienelastomer, einem verstärkenden Füllstoff, der hauptsächlich Kieselsäure umfasst, einem Vernetzungssystem auf Basis mindestens einer Peroxidverbindung, mindestens einer nicht elastomeren Polyphenolverbindung, wobei die nicht elastomere Polyphenolverbindung mindestens drei Benzolringe umfasst, die jeweils mindestens zwei vicinale Hydroxylgruppen tragen, und mindestens einer Verbindung aus der Guanidinfamilie basiert.

2. Verstärktes Produkt nach dem vorhergehenden Anspruch, wobei die Molmasse der Polyphenolverbindung größer als 600 g/mol ist.

3. Verstärktes Produkt nach einem der vorhergehenden Ansprüche, wobei die Polyphenolverbindung aus Gallotanninen, vorzugsweise aus Estern der Gallussäure und eines aus Pentosen und Hexosen ausgewählten Polyols, ausgewählt ist.

4. Verstärktes Produkt nach einem der vorhergehenden Ansprüche, wobei die Polyphenolverbindung aus Estern von Glucose und Gallussäure ausgewählt ist und vorzugsweise aus Polygalloylglucosen mit 3 bis 10 und vorzugsweise 5 bis 10 Galloyleinheiten ausgewählt ist.

5. Verstärktes Produkt nach einem der vorhergehenden Ansprüche, wobei der Gehalt der Polyphenolverbindung in der Kautschukzusammensetzung im Bereich von 0,1 bis 30 phe, bevorzugt von 5 bis 20 phe und vorzugsweise von 5 bis 15 phe liegt.

6. Verstärktes Produkt nach einem der vorhergehenden Ansprüche, wobei es sich bei der Verbindung aus der Guanidinfamilie um Diphenylguanidin handelt.

7. Verstärktes Produkt nach einem der vorhergehenden Ansprüche, wobei der Gehalt an Verbindung aus der Guanidinfamilie 0,5 bis 3 phe, bevorzugt 0,5 bis 2,5 phe und vorzugsweise 0,5 bis 2 phe beträgt.

8. Verstärktes Produkt nach einem der vorhergehenden Ansprüche, wobei die Kautschukzusammensetzung mindestens 5 phe funktionalisierte Elastomere, bevorzugt mindestens 1 phe und ganz besonders bevorzugt keine funktionalisierten Elastomere umfasst.

9. Verstärktes Produkt nach einem der vorhergehenden Ansprüche, wobei die Kautschukzusammensetzung keinen molekularen Schwefel umfasst oder weniger als 1 phe davon umfasst.

10. Verstärktes Produkt nach einem der vorhergehenden Ansprüche, wobei die Kautschukzusammensetzung frei von Zink oder Zinkoxid ist oder nur eine sehr geringe Menge davon, bevorzugt weniger als 1 phe, bevorzugt weniger als 0,5 phe, weiter bevorzugt weniger als 0,2 phe, enthält.

11. Verstärktes Produkt nach einem der vorhergehenden Ansprüche, wobei die Kautschukzusammensetzung ein aus Mitteln zur Kupplung und Mitteln zur Bedeckung der Kieselsäure ausgewähltes Mittel und einer Mischung davon umfasst, der Gehalt an Mittel in einem Bereich von 5 bis 20 Gew.-%, bezogen auf die Kieselsäuremenge, bevorzugt 6 bis 18 Gew.-%, bezogen auf die Kieselsäuremenge, liegt.

12. Verstärktes Produkt nach einem der vorhergehenden Ansprüche, wobei die Kautschukzusammensetzung 0,01 bis 10 phe Peroxidverbindungen, bevorzugt 1 bis 5 phe, umfasst.

13. Verstärktes Produkt nach einem der vorhergehenden Ansprüche, wobei das Vernetzungssystem eine aus organischen Peroxiden ausgewählte Peroxidverbindung umfasst.

14. Kautschukgegenstand, umfassend ein verstärktes Produkt nach einem der Ansprüche 1 bis 13.

15. Gegenstand nach dem vorhergehenden Anspruch, ausgewählt aus Luftreifen, Vollreifen, Transportbändern und Ketten.

## Claims

1. Reinforced product based on at least one metal reinforcing element embedded in a rubber composition, the rubber composition being based on at least one diene elastomer, a reinforcing filler mainly comprising silica, a crosslinking system based on at least one peroxide compound, at least one non-elastomeric polyphenolic compound, the non-elastomeric polyphenolic compound comprising at least three benzene rings, each bearing at least two vicinal hydroxyl groups, and at least one compound of the guanidine family.

2. Reinforced product according to the preceding claim, in which the molar mass of said polyphenolic compound is greater than 600 g/mol.

3. Reinforced product according to either one of the preceding claims, in which the polyphenolic compound is selected from gallotannins, preferably from esters of gallic acid and of a polyol selected from pentoses and hexoses.

4. Reinforced product according to any one of the preceding claims, in which the polyphenolic compound is selected from esters of glucose and of gallic acid, preferably selected from polygalloyl glucoses comprising from 3 to 10, and preferably from 5 to 10, galloyl units.

5. Reinforced product according to any one of the preceding claims, in which the content of polyphenolic compound in the rubber composition ranges from 0.1 to 30 phr, preferably from 5 to 20 phr and in a preferred manner from 5 to 15 phr.

6. Reinforced product according to any one of the preceding claims, in which the compound of the guanidine family is diphenylguanidine.

7. Reinforced product according to any one of the preceding claims, in which the content of compound of the guanidine family ranges from 0.5 to 3 phr, preferentially from 0.5 to 2.5 phr and preferably from 0.5 to 2 phr.

8. Reinforced product according to any one of the preceding claims, in which the rubber composition comprises less than 5 phr of functionalized elastomers, preferably less than 1 phr, and very preferably does not comprise functionalized elastomers.

9. Reinforced product according to any one of the preceding claims, in which said rubber composition does not comprise molecular sulfur or comprises less than 1 phr thereof.

10. Reinforced product according to any one of the preceding claims, in which said rubber composition is devoid of zinc or zinc oxide, or contains only a very small amount thereof, preferentially less than 1 phr, preferably less than 0.5 phr, more preferentially less than 0.2 phr.

11. Reinforced product according to any one of the preceding claims, in which the rubber composition comprises an agent selected from agents for coupling of and agents for covering silica, and mixtures thereof, the content of agent is in a range extending from 5% to 20% by weight relative to the amount of silica, preferentially from 6% to 18% by weight relative to the amount of silica.

12. Reinforced product according to any one of the preceding claims, in which the rubber composition comprises from 0.01 to 10 phr of peroxide compounds, preferentially from 1 to 5 phr.

13. Reinforced product according to any one of the preceding claims, in which the crosslinking system comprises a peroxide compound selected from organic peroxides.

14. Rubber article comprising a reinforced product according to any one of Claims 1 to 13.

15. Article according to the preceding claim, selected from pneumatic and non-pneumatic tyres, conveyor belts and caterpillar tracks.
